# DEMANDE DE BREVET EUROPEEN

(11) **EP 1 055 844 A1**
(43) Date de publication de la demande: **29.11.2000**
(21) Numéro de dépôt: 00401384.3
(22) Date de dépôt: 19.05.2000
(51) Int. Cl.: F16H 47/04, F16H 57/00, F04B 49/08, F04B 49/00

(54) **Transmission hydromécanique continue à dérivation de puissance pour véhicule automobile**

(30) Priorité: 20.05.1999 FR 9906422; 20.05.1999 FR 9906423; 26.05.1999 FR 9906658
(71) Demandeur: Renault, 92100 Boulogne Billancourt (FR)
(72) Inventeur: Butot, Jean-Luc, 78920 Ecquevilly (FR); Cheze, Frédéric, 78370 Plaisir (FR); Kargar, Keyvan, 78230 Le Pecq (FR); Lesle, Serge, 28130 Maintenon (FR)

(57) **Abrégé**

Transmission à dérivation de puissance à variation continue pour groupe moto-propulseur de véhicule automobile, du type comprenant, entre un arbre d'entrée (4) et un arbre de sortie (5), deux trains d'engrenage épicycloïdaux simples (1, 2) du type comportant chacun un planétaire, une couronne et un porte-satellites, et un variateur hydrostatique (3) composé de deux unités hydrostatiques à cylindrée variable (3a, 3b) reliées par un circuit hydraulique (11), caractérisée par le fait que la couronne (C1) du premier train d'engrenage épicycloïdal (1) relié à l'arbre d'entrée, présente, sur sa face frontale opposée au train d'engrenage épicycloïdal, une denture (30) déportée axialement, fixée à ladite face frontale par une soudure (31) et capable d'engrener avec un pignon d'entrée (17) du variateur hydrostatique.

## Description

La présente invention a pour objet une transmission de dérivation de puissance et à variation continue destinée à être intercalée entre un arbre d'entrée relié à un groupe moto-propulseur de véhicule automobile et un arbre de sortie relié à l'essieu des roues motrices du véhicule.

On sait que l'avantage principal d'une transmission à variation continue réside dans la possibilité de faire fonctionner le moteur thermique dans des conditions optimales pour l'ensemble des points de fonctionnement. On constate en effet dans ce cas un gain de consommation du véhicule automobile par rapport à une transmission à commande manuelle et ce malgré le rendement faible de ce type de transmission.

Une transmission à dérivation de puissance présente l'avantage de partager la puissance d'entrée et de n'envoyer qu'une fraction de la puissance totale dans un variateur hydrostatique. Il est ainsi possible de bénéficier à la fois des avantages du variateur, c'est-à-dire en particulier un nombre infini de rapports de la transmission et de ceux d'une chaîne mécanique, c'est-à-dire son rendement élevé.

Dans une telle transmission à dérivation de puissance à variation continue comportant deux ou trois trains d'engrenage épicycloïdaux et un variateur hydrostatique, il est possible de faire fonctionner la transmission dans un mode dit "à sortie couplée" dans lequel l'arbre de sortie est relié au variateur par l'intermédiaire d'un train d'engrenage rassembleur. Un tel mode à sortie couplée est bien adapté au démarrage du véhicule et aux faibles vitesses et ne nécessite aucun système d'accouplement progressif du type embrayage ou coupleur avec le moteur thermique. Toute la puissance passe par la pompe du variateur hydrostatique.

Il est également possible de faire fonctionner une telle transmission selon un mode dit "à deux points d'adaptation", dans lequel l'arbre de sortie est au contraire relié au variateur par l'intermédiaire d'un train d'engrenage épicycloïdal. Ce mode de fonctionnement est particulièrement bien adapté aux vitesses élevées correspondant aux plus fortes puissances transmises, étant donné le faible pourcentage de la puissance dérivée.

On connaît, par la demande de brevet français 2 463 335, une transmission à dérivation de puissance capable de fonctionner soit dans un mode à sortie couplée, soit dans un mode à deux points d'adaptation selon la vitesse de l'arbre de sortie. La transmission décrite dans ce document ne peut cependant être intégrée dans un véhicule automobile en raison de son encombrement.

La présente invention a pour objet une telle transmission à dérivation de puissance à variation continue, présentant un meilleur rendement, un encombrement moindre et un coût réduit par rapport aux transmissions connues jusqu'à présent.

La présente invention a particulièrement pour objet une telle transmission à dérivation de puissance à variation continue dont l'encombrement axial est réduit de façon à augmenter notablement la compacité de la transmission.

La transmission à dérivation de puissance à variation continue pour groupe moto-propulseur de véhicule automobile selon l'invention, est du type comprenant, entre un arbre d'entrée et un arbre de sortie, deux trains d'engrenage épicycloidaux simples du type comportant chacun un planétaire, une couronne et un porte-satellites, et un variateur hydrostatique composé de deux unités hydrostatiques à cylindrée variable reliées par un circuit hydraulique.

Selon un premier aspect de l'invention, la couronne du premier train d'engrenage épicycloidal relié à l'arbre d'entrée, présente, sur sa face frontale opposée au train d'engrenage épicycloidal, une denture déportée axialement , fixée à ladite face frontale par une soudure et capable d'engrener avec un pignon d'entrée du variateur hydrostatique. La transmission à dérivation de puissance selon l'invention comprend généralement un pignon de sortie monté sur l'arbre de sortie. Ledit pignon de sortie présente également, dans ce cas, sur l'une de ses faces frontales, une denture déportée axialement, fixée à ladite face frontale par une soudure et capable d'engrener avec l'un des pignons lié à la sortie du variateur hydrostatique.

Grâce à ces dispositions, il est possible de supprimer un pignon au moins d'un côté et, de préférence, de chaque côté de la transmission. Il en résulte une diminution notable de l'encombrement axial de la transmission.

Selon un autre aspect de l'invention, les porte-satellites des deux trains d'engrenage épicycloidaux sont liés entre eux par une liaison soudée.

Une telle liaison soudée remplaçant par exemple une liaison par vis permet également de réduire l'encombrement axial des deux trains d'engrenage épicycloidaux tout en satisfaisant les contraintes de tenue mécanique.

La demande de brevet allemand publiée DE 44 41 085 décrit une transmission à variation continue, comportant un variateur hydrostatique et un train planétaire composé à deux entrées et deux sorties permutables. La permutation est effectuée au moyen d'un système de commutation comprenant un dispositif à crabotage capable de faire passer la transmission d'un mode de fonctionnement à un autre.

La transmission décrite dans ce document antérieur présente l'inconvénient d'un confort de conduite insuffisant, en particulier au moment du passage d'un mode de fonctionnement à l'autre. De plus, l'architecture générale de la transmission ne permet pas d'aboutir à une compacité suffisante pour son montage dans un véhicule de tourisme. Enfin, on constate en pratique l'apparition de bruits de fonctionnement importants provenant du variateur hydrostatique en raison de la pression importante qui doit être utilisée.

La présente invention a donc aussi pour objet une telle transmission à dérivation de puissance à variation continue dont l'architecture permet de réduire considérablement les bruits émis lors du fonctionnement et qui , en outre, permet d'améliorer le confort de conduite et de diminuer l'encombrement de la transmission.

A cet effet, la transmission à dérivation de puissance à variation continue pour groupe moto-propulseur de véhicule automobile selon la présente invention, est du type comprenant, entre un arbre d'entrée et un arbre de sortie, au moins un train d'engrenage épicycloidal et un variateur hydrostatique composé de deux unités hydrostatiques à cylindrée variable reliées par un circuit hydraulique comportant des moyens de pilotage. Les unités hydrostatiques sont chacune encapsulées à l'intérieur d'une enveloppe fermée présentant des moyens d'atténuation acoustique des bruits de fonctionnement des dites unités hydrostatiques et des passages appropriés pour les arbres ou pignons de sortie des dites unités hydrostatiques.

Grâce à une telle disposition, les bruits dûs en particulier à la haute pression régnant dans les unités hydrostatiques et dans le circuit hydraulique peuvent être largement atténués. De plus, le montage et le démontage du variateur hydrostatique ainsi encapsulé se trouve facilité.

A cet égard, les deux unités hydrostatiques sont de préférence encapsulées à l'intérieur d'une seule enveloppe fermée.

Le circuit hydraulique et les moyens de pilotage du variateur hydrostatique sont également de préférence encapsulés dans l'enveloppe fermée précitée.

Les moyens d'atténuation acoustique comprennent avantageusement un revêtement acoustiquement isolant disposé à l'intérieur de l'enveloppe fermée. Il peut s'agir par exemple d'un feutre en un matériau acoustiquement isolant appliqué sur les parois internes de l'enveloppe.

Dans un mode de réalisation préféré de l'invention, les deux unités hydrostatiques sont disposées radialement en parallèle du train d'engrenage épicycloidal, ce qui permet de réduire l'encombrement axial de la transmission.

Dans un autre mode de réalisation, les deux unités hydrostatiques sont disposées axialement d'un côté ou de l'autre du train d'engrenage épicycloidal.

De préférence, la transmission de l'invention comprend un train d'engrenage épicycloidal composé, à deux entrées et deux sorties permutables à l'aide d'un dispositif de commutation.

L'arbre d'entrée est avantageusement relié d'une part au variateur hydrostatique et d'autre part au train d'engrenage épicycloidal composé, tandis que l'arbre de sortie est relié au train d'engrenage épicycloidal composé, ce qui permet de définir deux modes de fonctionnement pour la transmission.

Le dispositif de commutation permettant de passer d'un mode à l'autre comprend de préférence deux embrayages à friction multidisques et un organe de pilotage des dits embrayages. De cette manière, on obtient un changement de mode souple et progressif sous couple, garantissant un excellent confort de conduite du véhicule.

Le dispositif de commutation est avantageusement disposé en bout de la transmission, du côté opposé à l'arbre d'entrée de façon à équilibrer le train d'engrenage composé et à faciliter l'usinage des orifices d'alimentation en fluide de commande des embrayages.

La présente invention se rapporte encore à une unité hydrostatique à cylindrée variable, du type à pistons axiaux et plateau inclinable, utilisable en particulier comme pompe ou comme moteur dans un variateur hydrostatique d'une transmission à dérivation de puissance pour véhicule automobile.

Dans une telle transmission à dérivation de puissance, chaque élément du variateur hydrostatique peut avoir un rôle distinct selon la zone de fonctionnement. En fonctionnement pompe, l'unité hydrostatique prélève une certaine puissance mécanique sur la chaîne mécanique. En fonctionnement moteur, au contraire, l'unité hydrostatique fournit une certaine puissance hydraulique qui est transformée en puissance mécanique transmise à un élément de la chaîne mécanique.

Les unités hydrostatiques utilisées dans de telles transmissions à dérivation de puissance doivent non seulement pouvoir fonctionner soit en pompe, soit en moteur, mais également autoriser une inversion du sens de débit quelle que soit la valeur de la vitesse ou la cylindrée de l'unité hydrostatique. L'unité hydrostatique doit donc pouvoir tourner et débiter dans les deux sens et son fonctionnement doit pouvoir être assuré à pleine pression quelle que soit la vitesse ou la cylindrée

La commande de cylindrée d'une unité hydrostatique se fait habituellement au moyen d'un dispositif actionneur rotatif ou au moyen d'un vérin hydraulique à double effet, agissant directement sur l'inclinaison du plateau de l'unité hydrostatique.

Compte tenu des pressions importantes qui sont nécessaires lors de l'utilisation d'une telle unité hydrostatique à cylindrée variable dans une transmission à dérivation de puissance pour véhicule automobile, les dimensions qu'il est nécessaire de donner à de tels dispositifs à actionneur rotatif ou encore à de tels vérins à double effet rendent leur intégration dans la transmission pratiquement impossible.

La présente invention a donc pour objet de permettre la commande de cylindrée d'une telle unité hydrostatique du type à pistons axiaux et plateau inclinable, d'une manière telle que l'encombrement de l'unité hydrostatique équipée de son dispositif de commande de cylindrée soit le plus réduit possible.

A cet effet, l'unité hydrostatique à cylindrée variable selon la présente invention, du type à pistons axiaux et plateau inclinable, comporte un dispositif de commande de cylindrée actionné par une pression de pilotage, comprenant deux vérins hydrauliques de positionnement et de compensation à simple effet, disposés de façon à agir sur le plateau inclinable en des zones sensiblement diamétralement opposées, et un circuit hydraulique d'alimentation des deux vérins de positionnement et de compensation, capable d'alimenter l'un des deux vérins à la pression de refoulement de l'unité hydrostatique et l'autre vérin à une pression de commande modulée pour commander l'inclinaison du plateau.

De cette manière, selon le mode de fonctionnement, l'un des vérins est capable de compenser le couple de basculement provoqué par les pistons de l'unité hydrostatique tandis que l'autre vérin est alimenté à une pression de commande modulée inférieure à la pression de refoulement, en vue de la variation de cylindrée.

Le circuit hydraulique d'alimentation des deux vérins de positionnement et de compensation comprend de préférence un distributeur inverseur capable d'inverser l'alimentation des deux vérins à la pression de commande modulée, selon le sens de l'inclinaison du plateau. Le circuit hydraulique comprend également de préférence, pour chaque vérin, un distributeur sélecteur capable d'alimenter sélectivement chacun des deux vérins, à la pression de refoulement de l'unité hydrostatique ou à la pression de commande modulée.

Dans un mode de réalisation avantageux, le plateau inclinable comporte deux excroissances latérales diamétralement opposées sur lesquelles viennent s'appuyer respectivement les tiges des deux vérins hydrauliques de positionnement et de compensation, par l'intermédiaire de patins de friction.

D'une manière générale, une transmission à dérivation de puissance pour véhicule automobile du type comprenant un variateur hydrostatique comportera selon l'invention, deux unités hydrostatique à cylindrée variable telles que définies précédemment.

L'invention sera mieux comprise à l'étude d'un mode de réalisation particulier décrit à titre d'exemple nullement limitatif et illustré par les dessins annexés, sur lesquels
- la figure 1 représente schématiquement les principaux éléments d'une transmission à dérivation de puissance;
- la figure 2 représente des courbes de variation de la cylindrée d'une unité hydrostatique en fonction du rapport de transmission; et
- la figure 3 représente schématiquement les principaux éléments d'une transmission à dérivation de puissance modifiée selon la présente invention et d'encombrement réduit.
- la figure 4 illustre l'encapsulage des unités hydrostatiques proposé par l'invention.
- la figure 5 est une vue extérieure en bout d'une unité hydrostatique à cylindrée variable selon l'invention;
- la figure 6 est une vue schématique en section selon II-II de la figure 1; et
- la figure 7 illustre schématiquement un exemple de circuit hydraulique pour l'alimentation des vérins de positionnement et de compensation.

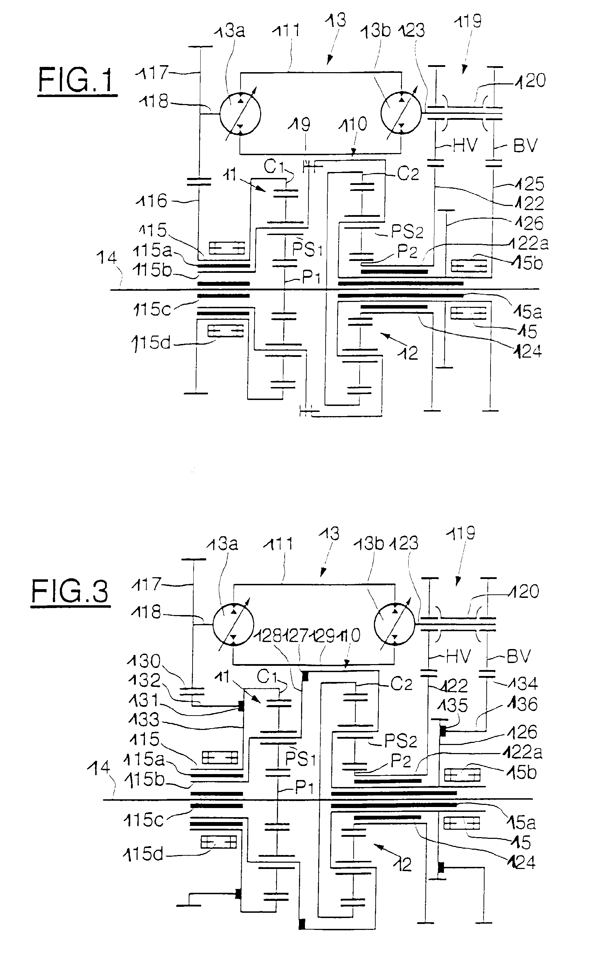

La transmission illustrée sur la figure 1 comprend un premier train d'engrenage épicycloïdal simple 11 associé à un deuxième train d'engrenage épicycloïdal simple 12 ainsi qu'un variateur hydrostatique 13, l'ensemble étant disposé entre un arbre d'entrée 14 relié à un groupe moto-propulseur, non illustré sur la figure, d'un véhicule automobile et un arbre de sortie 1 5 relié par l'intermédiaire de moyens non illustrés sur la figure à un essieu supportant les roues tractrices du véhicule automobile.

D'une manière plus précise, le premier train d'engrenage épicycloïdal 11 comprend un planétaire P1, un porte-satellites PS1 et une couronne C1. Le deuxième train d'engrenage épicycloïdal 12 comprend de même un planétaire P2, un porte-satellites PS2 et une couronne C2. Les porte-satellites PS1 et PS2 sont reliés entre eux mécaniquement par une liaison fixe 10 comportant une pluralité de vis axiales 19. Le planétaire P1 est monté fixe en rotation sur l'arbre d'entrée 14. Il en est de même de la couronne C2.

Les deux porte-satellites PS1 et PS2 sont montés fixes sur l'arbre de sortie 15, lequel est monté rotatif autour de l'arbre 14 par l'intermédiaire d'un roulement à aiguilles 15a.

Le variateur hydrostatique 13 comprend une première unité hydrostatique à cylindrée variable 13a pouvant fonctionner à la fois en tant que pompe et en tant que moteur, et une deuxième unité hydrostatique 13b du même type que l'unité hydrostatique 13a, à cylindrée variable et pouvant également fonctionner à la fois en pompe et en moteur.

Dans un mode de réalisation préférentiel de l'invention, les unités hydrostatiques 13a et 13b sont des machines hydrauliques à pistons axiaux à cylindrée variable. Les unités hydrostatiques 13a et 13b sont reliées entre elles par un circuit hydraulique 111.

La couronne C1 du premier train d'engrenage épicycloïdal 11 est solidaire d'un arbre 115 monté par un roulement à aiguilles 115a sur un arbre 115b solidaire du porte-satellite PS1 et monté rotatif par rapport à l'arbre 14 par l'intermédiaire d'un roulement à aiguilles 115c. Un palier à roulement 115d permettant la reprise des efforts issus des éléments des deux trains d'engrenage épicycloidaux 11, 12, est disposé sur l'arbre 115. Un pignon 116 est monté sur l'arbre 115, à l'opposé du train d'engrenage 11 et engrene avec un pignon 117 monté sur l'arbre de sortie 118 de l'unité hydrostatique 13a.

Un dispositif de changement de mode référencé 119 dans son ensemble comprend un système de crabotage 120 coopérant avec l'arbre mécanique de sortie 123 de l'unité hydrostatique 13b de façon à mettre en prise alternativement avec les autres éléments de la transmission, un pignon basse vitesse BV ou un pignon haute vitesse HV.

Le pignon BV peut transmettre la puissance à l'arbre de sortie 15 par l'intermédiaire d'un pignon 125 monté sur l'arbre 15. Le pignon de sortie 26 solidaire de l'arbre de sortie 15 engrène avec les pignons, non représentés sur la figure, d'une descente reliée à un pont. Un palier à roulement 15b monté sur l'arbre 15 entre les pignons 125 et 126 permet en outre la reprise des efforts issus des éléments des deux trains d'engrenage épicycloidaux 11, 12, en coopération avec le palier 115d.

Le pignon haute vitesse HV peut engrener avec un pignon 122 lié mécaniquement au planétaire P2 du deuxième train d'engrenage épicycloïdal 12 et monté sur un arbre 122a monté rotatif sur l'arbre de sortie 15 par l'intermédiaire d'un palier à aiguilles 124.

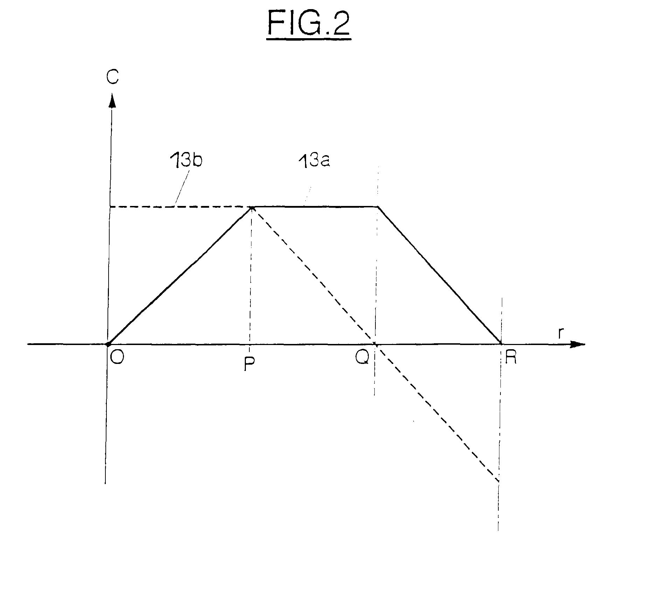

On va maintenant décrire le fonctionnement du mécanisme de transmission illustré sur la figure 1 en se référant également aux courbes schématiques de la figure 2 qui illustrent les variations de cylindrée C en fonction du rapport de transmission r, pour l'unité hydrostatique 13a (courbe en trait plein) et pour l'unité hydrostatique 13b (courbe en tiret).

Lors d'une phase de démarrage du véhicule et aux basses vitesses ne nécessitant aucun accouplement avec le moteur thermique, le dispositif de changement de mode 119 est actionné de façon à placer le pignon BV en prise. Le couple de sortie est fourni par l'unité hydrostatique 13b à pleine cylindrée fonctionnant en moteur et alimentée par l'unité hydrostatique 13a fonctionnant en pompe. L'accroissement du régime de sortie est obtenu par augmentation de la cylindrée de l'unité 13a jusqu'à sa valeur maximale. C'est ce qui est représenté sur les courbes de la figure 2 du point O au point P. Dans cette phase, où la transmission fonctionne en mode "sortie couplée", la puissance fournie par le moteur thermique augmente et le couple de sortie s'accroît par addition au couple fourni par l'unité hydrostatique 13b du couple mécanique créé sur l'arbre de sortie par la réaction de l'unité hydrostatique 13a sur le deuxième train d'engrenage épicycloïdal 12. Le couple est maximal lorsque les deux unités hydrostatiques sont à pleine cylindrée (point P sur la figure 2). On voit qu'à partir du point O, la cylindrée de l'unité hydrostatique 13b a été maintenue à sa valeur maximale sans changement jusqu'au point P. En ce qui concerne l'unité hydrostatique 13a, sa cylindrée est passée d'une valeur nulle à la valeur maximale correspondant au point P.

Au-delà du point P, l'augmentation du régime est obtenue par réduction de la cylindrée de l'unité 13b fonctionnant toujours en moteur. Le fonctionnement est à puissance constante et la fraction de puissance dérivée par le variateur hydrostatique est décroissante. Lorsque la cylindrée de l'unité hydrostatique 13b est nulle (point Q sur la figure 2), l'unité 13a est à vitesse nulle et assure le blocage de l'arbre de réaction du deuxième train d'engrenage épicycloïdal 12. Toute la puissance est transmise par la chaîne mécanique sur ce point particulier que l'on appelle le point d'adaptation du mode "sortie couplée".

A partir de ce point d'adaptation Q du mode "sortie couplée", on fait fonctionner la transmission dans un mode différent dit "à deux points d'adaptation". A cet effet, le dispositif de changement de mode 119 est actionné de façon à placer le pignon haute vitesse HV en prise. A ce moment, correspondant au point Q sur le schéma de la figure 2, l'unité 13a est à pleine cylindrée et à régime nul, tandis que l'unité 13b est à cylindrée nulle et entraînée. La variation du rapport de transmission r est obtenue par réduction de la cylindrée de l'unité hydrostatique 13a qui fonctionne maintenant en moteur et non plus en pompe et dont le régime croît. Simultanément, la cylindrée de l'unité hydrostatique 13b est augmentée et son régime de rotation décroît, l'unité 13b fonctionnant en pompe et non plus en moteur. L'unité hydrostatique 13b qui fonctionne en tant que pompe, prélève de la puissance sur l'arbre de réaction du deuxième train d'engrenage épicycloïdal 12 et l'unité 13a qui fonctionne en moteur restitue cette puissance sur la couronne C1 du premier train d'engrenage épicycloïdal 11.

Ce fonctionnement peut se poursuivre jusqu'à ce que l'unité hydrostatique 13b soit à pleine cylindrée et à régime nul, tandis que l'unité hydrostatique 13a est entraînée mais à cylindrée nulle, ce qui correspond au deuxième point d'adaptation R illustré sur la figure 2. En ce deuxième point R, toute la puissance est également transmise par la voie mécanique comme c'était le cas au premier point d'adaptation Q.

L'association de ces deux modes de fonctionnement permet de réaliser une transmission particulièrement intéressante et bien adaptée à un véhicule automobile sans aucune recirculation de la puissance à partir du démarrage jusqu'au rapport de transmission le plus long, à condition de faire en sorte que le deuxième point d'adaptation R corresponde au rapport le plus long de la transmission.

La structure de la transmission illustrée sur la figure 1 avec ses deux trains d'engrenage épicycloïdaux 11 et 12 doit respecter un certain nombre d'impératifs tenant en particulier aux liaisons entre les deux trains d'engrenage 11 et 12, la reprise des efforts développés lors du fonctionnement de la transmission entraînant en particulier un positionnement spécifique des paliers à roulement 15b, 115d permettant de reprendre les efforts provenant des différents éléments des trains d'engrenage épicycloïdaux 11 et 12.

Il en résulte un encombrement de la transmission qui constitue un inconvénient important pour la mise en oeuvre dans un véhicule automobile. C'est ainsi, en particulier, que la liaison entre les deux porte-satellites PS1, PS2 au moyen d'une pluralité de vis axiales 19 entraîne une augmentation de l'encombrement axial de l'ensemble formé par les deux trains d'engrenage épicycloïdaux 11 et 12.

De plus, la reprise du mouvement de la couronne C1 liée cinématiquement à l'arbre 118 de l'unité hydrostatique 13a du variateur hydrostatique 13, oblige à prévoir un pignon 116. La reprise des efforts issus des éléments des deux trains d'engrenage épicycloïdaux 11 et 12 oblige à positionner le palier à roulement 15d comme indiqué sur la figure 1 et à reporter le pignon 116 à l'extérieur de ce palier à roulement 115d, ce qui a encore pour effet d'augmenter l'encombrement axial de l'ensemble.

De la même manière, la reprise du mouvement de l'unité hydrostatique 13b dans le deuxième mode de fonctionnement de la transmission et le respect de la cinématique souhaitée amènent à prévoir le pignon 125 solidaire des porte-satellites PS1 et PS2 des deux trains d'engrenage épicycloïdaux 11 et 12. La reprise des efforts issus des éléments des deux trains d'engrenage épicycloïdaux 11 et 12 oblige à placer le palier à roulement 15b comme indiqué sur la figure 1 et à reporter ce pignon 125 à l'extérieur de l'ensemble, ce qui a de nouveau pour effet d'augmenter l'encombrement axial de la transmission.

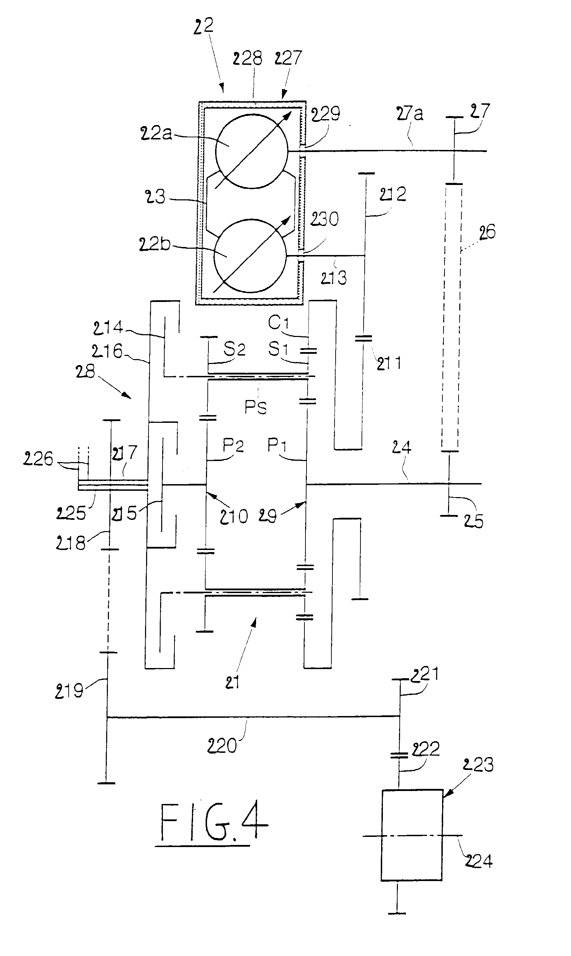

La figure 3 illustre les modifications importantes apportées selon la présente invention, qui permettent de réduire notablement les dimensions axiales de la transmission au même titre que son encombrement radial.

Sur la figure 3, les éléments identiques à ceux qui sont illustrés sur la figure 1 portent les mêmes références.

La liaison mécanique 110 des porte-satellites PS1 et PS2 est réalisée sous la forme d'une soudure 127 qui remplace les vis 19 de la transmission illustrée sur la figure 1. La soudure 127 est de préférence réalisée sous la forme d'un cordon continu périphérique entre une portion sensiblement radiale 128 du porte-satellites PS1 et une portion annulaire 129 solidaire du porte-satellites PS2.

La couronne C1 du premier train d'engrenage épicycloïdal 11 présente, sur sa face frontale opposée au train d'engrenage épicycloïdal 11, une denture 130 déportée axialement et fixée à ladite face frontale par une soudure 131. La denture 130 est de préférence formée sur un élément annulaire 132 qui vient en regard d'une portion radiale 133 solidaire de la couronne C1 et de l'arbre 115 Un cordon de soudure continu périphérique assure la liaison soudée 131 entre ces deux surfaces en regard.

La denture déportée 130 engrène directement avec le pignon d'entrée 117 solidaire de l'arbre d'entrée 118 de l'unité hydrostatique 13a. La suppression du pignon 116 monté à l'extérieur de la transmission, au-delà du palier à roulement 115d, permet de réduire considérablement l'encombrement axial de la transmission.

Le pignon de sortie 126, solidaire de l'arbre de sortie 15, présente également sur sa face frontale opposée au deuxième train d'engrenage épicycloïdal 12, une denture 134 déportée axialement et fixée à la face frontale du pignon 126 par une soudure 135. La denture 134 est avantageusement prévue sur un élément annulaire 136 qui vient en regard de la face frontale extérieure du pignon 126 A cet endroit, la liaison par soudure se fait par exemple au moyen d'un cordon continu périphérique 135.

La denture déportée 134 engrène directement avec le pignon BV qui peut, dans l'un des modes de fonctionnement de la transmission, être relié à l'arbre de sortie 123 de la deuxième unité hydrostatique 3b.

Comme précédemment, la suppression du pignon supplémentaire 125 placé à l'extérieur de la transmission au-delà du palier à roulement 15b, permet de réduire notablement l'encombrement axial de la transmission.

C'est ainsi qu'une transmission, telle qu'illustrée sur la figure 3, peut voir ses dimensions hors tout dans le sens axial diminuer d'au moins 25% par rapport à la structure illustrée sur la figure 1. Simultanément, l'encombrement dans le sens radial peut être diminué d'environ 15%.

Il y a lieu de noter que cette diminution d'encombrement n'apparaît pas sur la figure 3, compte tenu de son caractère essentiellement schématique.

Bien que la présente invention ait été expliquée à partir d'un exemple de transmission comprenant uniquement deux trains d'engrenage épicycloïdaux de type simple, on comprendra qu'il soit parfaitement possible d'utiliser l'invention également dans une transmission comportant plus de deux trains d'engrenage épicycloïdaux et en particulier trois trains d'engrenage épicycloïdaux.

Tel qu'elle est illustrée sur la figure 4, la transmission à dérivation de puissance selon l'invention comprend un train d'engrenage épicycloïdal composé référencé 21 dans son ensemble et un variateur hydrostatique référencé 22 dans son ensemble. Le variateur hydrostatique 22 est composé d'une première unité hydrostatique à cylindrée variable 22a et d'une deuxième unité hydrostatique à cylindrée variable 22b. Chacune de ces unités hydrostatiques 22a, 22b peut fonctionner à la fois en pompe et en moteur. Il peut s'agir avantageusement de machines à pistons axiaux à cylindrée variable. Un circuit hydraulique 23 relie entre elles les deux unités hydrostatiques 22a, 22b et comprend en outre des moyens de pilotage non représentés sur la figure.

La puissance de sortie du groupe moto-propulseur du véhicule attaque directement l'arbre d'entrée 24 de la transmission. L'arbre d'entrée 24 comprend un pignon 25 engrènant avec une chaîne 26 et un pignon 27 reliés à l'arbre mécanique 7a de la première unité hydrostatique 22a.

L'arbre d'entrée 24 est également fixé mécaniquement à l'entrée du train d'engrenage épicycloïdal composé 21.

Le train d'engrenage épicycloïdal composé 21 est constitué par l'association de deux trains planétaires 29 et 210. Les satellites S1 du premier train planétaire 29 et S2 du deuxième train planétaire 210 sont montés sur un porte-satellites commun PS. Le planétaire P1 du train planétaire 29 est monté directement sur l'arbre d'entrée 24 et constitue la première entrée du train d'engrenage épicycloïdal composé 21. La couronne C1 du train planétaire 29 engrène, quant à elle, par l'intermédiaire d'une denture 211 avec le pignon 212 solidaire de l'arbre mécanique 213 de l'unité hydrostatique 22b. De ce fait, la couronne C1 constitue la deuxième entrée du train d'engrenage épicycloïdal composé 21.

Un dispositif de commutation 28 comprend deux embrayages à friction multidisques 214 et 215 à commande hydraulique, représentés très schématiquement sur la figure 4, et capables d'être commandés au moyen d'un organe de pilotage hydraulique non représenté en détail sur la figure 4. Le flasque extérieur 216 commun aux deux embrayages 214, 215 est solidaire de l'arbre de sortie 217 de la transmission. Sur cette arbre de sortie 217, est monté un pignon de sortie 218 qui engrène avec un pignon de descente 219 monté sur un arbre 220 comportant un deuxième pignon de descente 221, lequel engrène avec le pignon 222 du pont comportant un différentiel 223. L'arbre de sortie 224 du différentiel 223 constitue l'essieu des roues motrices du véhicule.

On a représenté schématiquement sur la figure 4 des alésages 225 pratiqués dans l'arbre de sortie 217 pour l'alimentation en fluide hydraulique de commande des deux embrayages 214 et 215, les conduites d'alimentation 226 étant reliées à un bloc de commande non illustré sur la figure 4.

Les disques de l'embrayage 214 peuvent être solidarisés avec le flasque extérieur 216 lors de la commande de fermeture de l'embrayage 214. Ces disques sont solidaires du porte-satellites PS qui constitue donc la première sortie du train d'engrenage épicycloïdal composé 21, active lorsque l'embrayage 214 est fermé.

De la même manière, les disques de l'embrayage 215 sont solidaires du planétaire P2 du deuxième train planétaire 210, constituant ainsi la deuxième sortie du train d'engrenage épicycloïdal composé 21, active lorsque le deuxième embrayage 15 est fermé.

Dans l'exemple illustré, les deux unités hydrostatiques 22a, 22b ainsi que le circuit hydraulique 23, sont encapsulés à l'intérieur d'une enveloppe fermée 227. Les moyens de pilotage du variateur hydrostatique, non illustrés sur la figure, peuvent également être encapsulés dans la même enveloppe 227. L'enveloppe fermée 227 présente des moyens d'atténuation acoustique des bruits de fonctionnement des unités hydrostatiques 22a, 22b et du circuit hydraulique 23. Ces moyens d'atténuation sont représentés sur la figure 4 sous la forme d'un revêtement acoustique isolant 228 qui recouvre à l'intérieur les parois de l'enveloppe 227.

Tout type de revêtement acoustiquement isolant peut être envisagé. On peut également obtenir un résultat analogue au moyen d'une conformation particulière des parois internes de l'enveloppe 227, en prévoyant par exemple des chicanes appropriées de nature à réduire le développement des bruits à l'extérieur de l'enveloppe 227.

A titre de revêtement acoustiquement isolant, on peut utiliser des matériaux sous forme de feutre qui absorbent les ondes sonores sur une large plage de fréquences. On peut également envisager un revêtement interne 228 sous la forme d'une structure en nid d'abeille, couramment utilisée dans la technique pour atténuer les ondes sonores.

L'enveloppe fermée 227 comprend, dans l'exemple illustré, deux orifices 229, 230 pour le passage des arbres mécaniques 27a et 213 des deux unités hydrostatiques 22a, 22b.

Dans une variante d'exécution, on pourrait imaginer que l'enveloppe 227 comporte uniquement des orifices sous forme de fentes, laissant passer une portion de la denture des pignons 27 et 212 montés sur les arbres 27a et 213.

Bien que dans l'exemple illustré, les deux unités hydrostatiques 22a et 22b aient été logées dans une seule enveloppe fermée 227, on comprendra qu'il soit possible, en fonction de l'architecture retenue pour la transmission, de prévoir deux enveloppes indépendantes encapsulant d'une manière individuelle chacune des unités hydrostatiques 22a et 22b.

On notera que le variateur hydrostatique 23 est monté, dans l'exemple illustré, radialement en parallèle du train d'engrenage épicycloïdal composé 21, ce qui permet de réduire l'encombrement hors tout dans le sens axial de la transmission. L'encapsulage des unités hydrostatiques 22a, 22b rend d'ailleurs particulièrement aisé un tel montage de ces unités hydrostatiques ainsi que leur démontage, par exemple pour entretien.

Le dispositif de commutation 28 constitué par les deux embrayages 214 et 215 se trouve monté dans l'exemple illustré en bout de la transmission, du côté opposé à l'arbre d'entrée 24, ce qui permet là encore d'obtenir une architecture d'ensemble particulièrement compacte et équilibrée.

La transmission illustrée sur la figure 4 permet d'effectuer une division de la puissance et fonctionne selon deux modes dits "à entrée couplée", du fait que l'arbre d'entrée 24 est relié à la fois au train d'engrenage épicycloïdal composé 1 par l'intermédiaire du planétaie P1 et, d'autre part, au variateur hydrostatique 23 par l'intermédiaire de la chaîne 26.

Dans le premier mode de fonctionnement, la sortie du train d'engrenage épicycloïdal composé 21 constitué par le porte-satellites PS est connectée au pignon de sortie 218 par l'intermédiaire de l'embrayage 214 qui est fermé tandis que l'embrayage 215 est ouvert.

Dans le deuxième mode de fonctionnement, au contraire, la sortie du train d'engrenage épicycloïdal composé 21 est le planétaire P2 relié au pignon de sortie 218 par l'intermédiaire de l'embrayage 215 qui est fermé, tandis que l'embrayage 214 est ouvert.

Pour les deux modes, il existe un point particulier pour lequel la vitesse de sortie du train d'engrenage épicycloïdal 21 est nulle. Ce point, qui est défini par les raisons du train d'engrenage épicycloïdal composé 21 et une position particulière de la cylindrée de l'unité hydrostatique 22a, représente la position "neutre en prise". Cette position permet de supprimer le convertisseur hydrocinétique utilisé habituellement dans les transmissions de véhicules automobiles. Le changement de mode s'effectue à ce point, pour lequel les régimes de rotation des différents éléments de la transmission sont identiques. De ce fait, le changement de mode est réalisé de façon pratiquement synchronisée.

On constate néanmoins que le changement de mode est effectué avec une puissance dérivée non nulle. L'utilisation des deux embrayages 214 et 215 à commande hydraulique permet d'effectuer le passage d'un mode à l'autre d'une manière souple, progressive, sous couple, de façon à satisfaire le confort de conduite exigé pour un véhicule automobile.

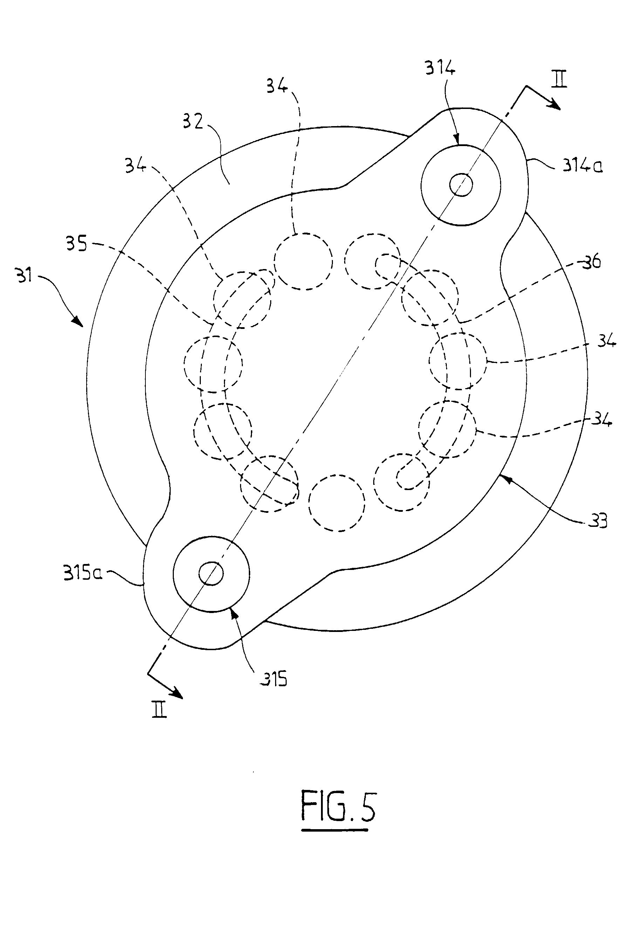

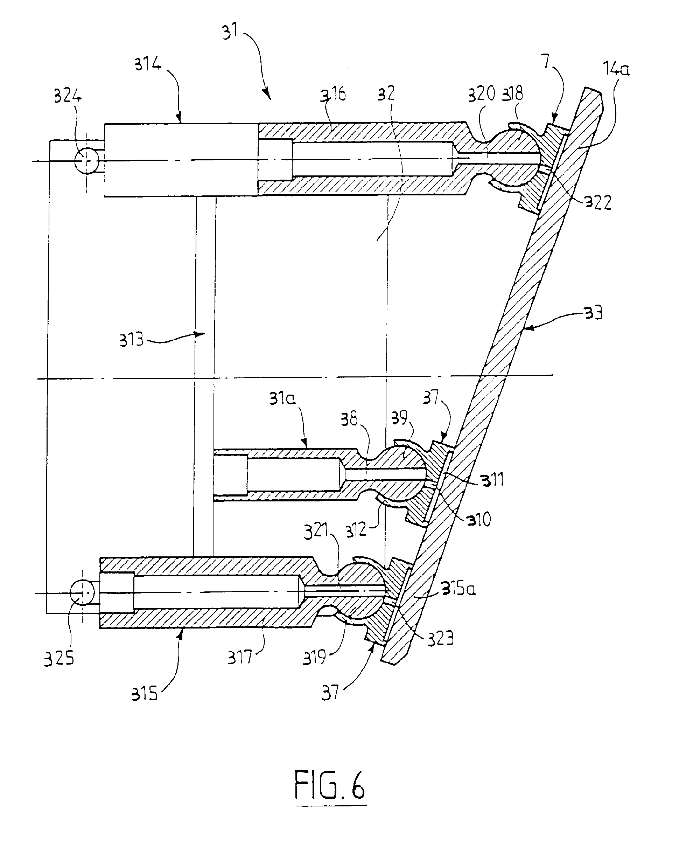

Telle qu'elle est illustrée schématiquement sur les figures 5 et 6, l'unité hydrostatique à cylindrée variable 31 comprend onze pistons axiaux 1a montés dans un barillet 32 et coopérant avec un plateau inclinable 33. Les différents pistons axiaux 31a se déplacent dans des logements cylindriques 34 qui sont en communication, lors de la rotation du barillet 32 et de l'ensemble des pistons 31, avec deux lumières 35 et 36 en forme de haricot disposées circonférentiellement sur le trajet des alésages cylindriques 34 et pratiqués dans une glace de distribution 313. La lumière 36 joue le rôle d'orifice de refoulement, tandis que la lumière 35 joue le rôle d'orifice d'alimentation pour le débit d'huile traversant l'unité hydrostatique.

Les différents pistons, tels que le piston la visible en coupe sur la figure 32, viennent s'appuyer sur le plateau incliné 33 par l'intermédiaire de patins glissants 37. D'une manière classique, les patins 37 sont équilibrés par la pression de l'huile enfermée derrière le piston la dans le logement 34 correspondant et transmise au patin 37 par le conduit 38 traversant la tête sphérique 39 du piston 31 et communiquant par le conduit 310 avec une zone de glissement 311 située entre le patin 37 et le plateau 33. Le patin 37 est maintenu autour de la tête sphérique 39 par un logement en saillie 312 qui vient entourer la tête sphérique 39 tout en pivotant par rapport à cette dernière, selon l'inclinaison du plateau 33.

L'alimentation et le refoulement à haute pression par les lumières 36 et 35 se font par des conduits non représentés sur les figures, et aboutissant sur la glace de distribution 313.

La variation de la cylindrée se fait par inclinaison du plateau 33.

A cet effet et selon la présente invention, la commande d'inclinaison du plateau 33 est réalisée au moyen de deux vérins hydrauliques 314 et 315 identiques et à simple effet, ayant à la fois un rôle de positionnement du plateau inclinable 33 et de compensation du couple de rappel provoqué par la haute pression de refoulement agissant sur un certain nombre de pistons la de l'unité hydrostatique 31.

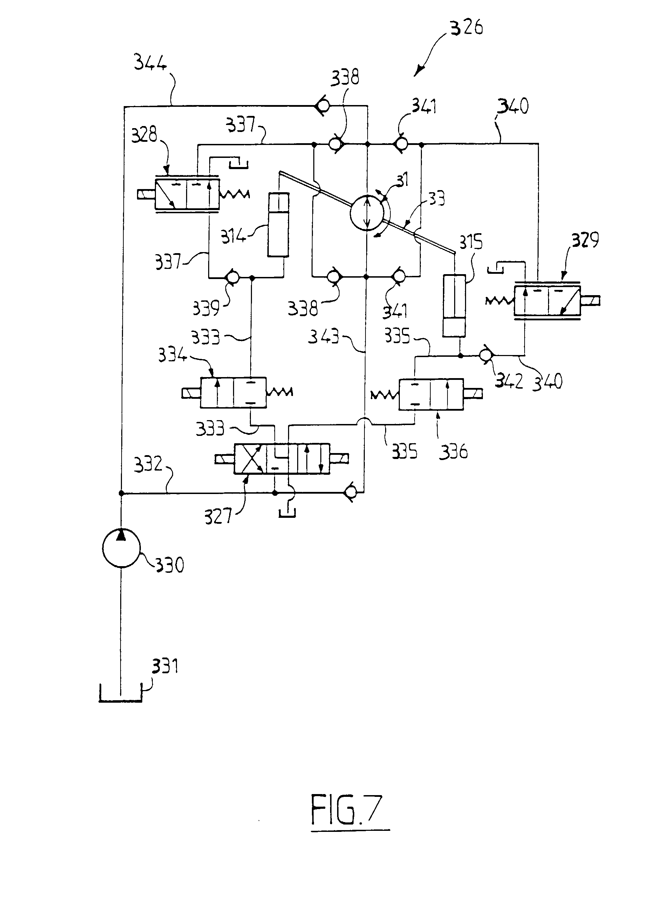

Les deux vérins 314, 315 sont disposés de façon diamétralement opposée et agissent directement sur le plateau 33, qui comporte deux excroissances latérales diamétralement opposées 314a et 315a visibles sur la figure 7.

Chacun des vérins 314, 315 comporte un piston 316, 317 muni d'une extrémité sphérique 318, 319 qui vient coopérer avec un patin de glissement 37 identique aux patins 37 servant d'appui pour les différents pistons axiaux 1a. Ces patins de glissement 37 sont également équilibrés de la même manière que ceux des pistons axiaux 31a, grâce à l'existence de conduits 320, 321 pratiqués dans les pistons 316, 317 et de passages 322, 323 pratiqués dans les patins 37.

Les vérins 314, 315 sont alimentés par des conduits 324, 325 faisant partie d'un circuit hydraulique d'alimentation 326 illustré sur la figure 7. On n'a représenté sur la figure 7 que le circuit de commande de la cylindrée de l'unité hydrostatique 31, l'alimentation et le refoulement à haute pression n'ont pas été représentés.

Le circuit hydraulique 326 comprend un distributeur inverseur 327 constitué à titre d'exemple par une valve à quatre voies et trois positions commandée électriquement, capable d'inverser l'alimentation des deux vérins 314, 315 selon le sens de l'inclinaison du plateau 33, c'est-à-dire selon que l'unité hydrostatique 31 fonctionne en pompe ou en moteur.

Le circuit hydraulique 326 comprend également deux distributeurs sélecteurs 328, 329, associés respectivement au vérin 314 et au vérin 315. Les deux distributeurs 328, 329 sont réalisés dans l'exemple illustré sous la forme d'une valve à trois voies et deux positions à commande électrique et retour par ressort.

Une pompe de gavage 330 pompe l'huile de la bâche 331 et vient alimenter par le conduit 332 le distributeur inverseur 327 qui dirige l'huile, soit sur le vérin 314 par le conduit 333 à travers un distributeur d'arrêt 334 constitué par une valve à deux positions et deux voies à commande électrique et rappel par ressort, soit vers le vérin 315 par le conduit 335 à travers un distributeur d'arrêt 336 constitué par une valve à deux positions et deux voies à commande électrique et retour par ressort.

La haute pression refoulée par l'unité hydrostatique 31 fonctionnant en pompe ou alimentant l'unité hydrostatique 31 fonctionnant en moteur, est également appliquée à l'un des vérins 314, 315.

Dans l'exemple illustré sur la figure 5 qui correspond à la position du plateau 33 illustrée sur la figure 6, le vérin 314 sert à compenser le couple de rappel provoqué par l'action de la haute pression dans la zone de refoulement de la lumière 35 sur les pistons axiaux la se trouvant en face de la lumière 35. A cet effet, le vérin de compensation 314 est également alimenté par la haute pression régnant dans l'unité hydrostatique 31. L'huile à haute pression est en effet appliquée au vérin 314 par le conduit 337 à travers le distributeur sélecteur 328 en passant par les clapets anti-retour 338, 339. Deux clapets anti-retour 338 sont placés des deux côtés de l'unité hydrostatique 31 pour tenir compte du sens de fonctionnement de l'unité hydrostatique. Dans ce mode de fonctionnement, le distributeur sélecteur 328 se trouve placé dans la position inverse de celle qui est représentée sur la figure 7.

Au contraire, le vérin 315 joue un rôle de pilotage de la variation de la cylindrée de l'unité hydrostatique 31 en étant uniquement alimenté par la pression de commande modulée provenant de la pompe de gavage 330. A cet effet, le distributeur sélecteur 329 se trouve dans la position illustrée sur la figure 7. La pression de commande est en pratique largement inférieure à la haute pression traversant l'unité hydrostatique 31.

Lors d'un fonctionnement avec une inclinaison inverse du plateau 33, les rôles respectifs des deux vérins 314 et 315 sont inversés, la haute pression alimentant cette fois le vérin 315 par l'intermédiaire des conduits 340 en traversant le distributeur sélecteur 329 placé dans la position inverse de celle qui est représentée sur la figure 7 et à travers les clapets anti-retour 341 et 342.

On notera que la pression de commande modulée provenant de la pompe de gavage 330 alimente également l'unité hydrostatique 1 par le conduit 343 ou le conduit 344 en fonction du sens de rotation de ladite unité hydrostatique.

Par un choix convenable de la section des vérins de compensation et de positionnement 314, 315, on comprend qu'il est possible d'équilibrer le couple de rappel provoqué par la haute pression agissant sur les pistons axiaux la dans le barillet 32. Le vérin 314 ou 315 à simple effet ainsi alimenté à la haute pression de refoulement, permet de vaincre le couple résistant induit par les patins 37 des pistons axiaux 3 la dans la zone de refoulement. L'autre vérin à simple effet 314 ou 315 connecté à la pression de commande modulée, permet de positionner le plateau à l'inclinaison souhaitée correspondant à la cylindrée recherchée, et ce de manière simple étant donné que le couple résistant est annulé par le premier vérin.

Les deux vérins 314, 315 peuvent aisément être permutés dans leur fonction par action sur le distributeur sélecteur 327, afin de réaliser le pilotage de l'inclinaison du plateau 33 dans les deux sens d'inclinaison dudit plateau.

L'utilisation des vérins 314 et 315 sous la forme de vérins à simple effet agissant de manière sensiblement diamétralement opposée sur le plateau inclinable 33, permet de réduire sensiblement le diamètre de chacun des vérins 314, 315 et de réaliser un ensemble présentant un encombrement réduit, acceptable pour son intégration dans une transmission à dérivation de puissance pour véhicule automobile.

## Revendications

1. Transmission à dérivation de puissance à variation continue pour groupe moto-propulseur de véhicule automobile, du type comprenant, entre un arbre d'entrée (14) et un arbre de sortie (15), deux trains d'engrenage épicycloïdaux simples (11, 12) du type comportant chacun un planétaire, une couronne et un porte-satellites, et un variateur hydrostatique (13) composé de deux unités hydrostatiques à cylindrée variable (13a, 13b) reliées par un circuit hydraulique (111), caractérisée par le fait que la couronne (C1) du premier train d'engrenage épicycloïdal (11) relié à l'arbre d'entrée, présente, sur sa face frontale opposée au train d'engrenage épicycloïdal, une denture (130) déportée axialement, fixée à ladite face frontale par une soudure (131) et capable d'engrener avec un pignon d'entrée (117) du variateur hydrostatique.

2. Transmission à dérivation de puissance selon la revendication 1, caractérisée par le fait qu'elle comprend un pignon de sortie (126) monté sur l'arbre de sortie (15), ledit pignon de sortie présentant, sur l'une de ses faces frontales, une denture (134) déportée axialement, fixée à ladite face frontale par une soudure (135) et capable d'engrener avec l'un des pignons (BV) liés à la sortie du variateur hydrostatique.

3. Transmission à dérivation de puissance selon la revendication 1, caractérisée par le fait que les porte-satellites (PS1, PS2) des deux trains d'engrenage épicycloïdaux (11, 12) sont liés entre eux par une liaison soudée (127).

4. Transmission à dérivation de puissance selon la revendication 3, caractérisée par le fait qu'elle comprend en outre des moyens de sélection (119) capables de faire passer la dérivation de puissance, d'un mode à sortie couplée dans lequel l'arbre de sortie (15) est directement relié au variateur, à un mode à deux points d'adaptation dans lequel l'arbre de sortie (15) est relié au variateur par l'intermédiaire d'un train d'engrenage épicycloïdal (12).

5. Transmission à dérivation de puissance selon l'une quelconque des revendications précédentes, caractérisée par le fait que les unités hydrostatiques sont des machines à pistons axiaux à cylindrée variable.

6. Transmission à dérivation de puissance à variation continue pour groupe moto-propulseur de véhicule automobile, du type comprenant,entre un arbre d'entrée (24) et un arbre de sortie (217), au moins un train d'engrenage épicycloidal (21) et un variateur hydrostatique (22) composé de deux unités hydrostatiques à cylindrée variable (22a, 22b) reliées par un circuit hydraulique (23) comportant des moyens de pilotage, caractérisée par le fait que les unités hydrostatiques (22a, 22b) sont chacune encapsulées à l'intérieur d'une enveloppe fermée (227) présentant des moyens (228) d'atténuation acoustique des bruits de fonctionnement des dites unités hydrostatiques et des passages (229, 230) appropriés pour les arbres (27a, 213) ou pignons de sortie des dites unités hydrostatiques.

7. Transmission à dérivation de puissance selon la revendication 6 caractérisée par le fait que les deux unités hydrostatiques (22a, 22b) sont encapsulées à l'intérieur d'une seule enveloppe fermée.

8. Transmission à dérivation de puissance selon la revendication 6 ou 7 caractérisée par le fait que le circuit hydraulique et les moyens de pilotage du variateur hydrostatique sont également encapsulés dans l'enveloppe fermée précitée.

9. Transmission à dérivation de puissance selon la revendication 6, 7 ou 8 caractérisée par le fait que les moyens d'atténuation acoustique comprennent un revêtement acoustiquement isolant (228) disposé à l'intérieur de l'enveloppe fermée (227).

10. Transmission à dérivation de puissance selon l'une quelconque des revendications 6 à 9 caractérisée par le fait que les deux unités hydrostatiques (22a, 22b) sont disposées radialement en parallèle du train d'engrenage épicycloidal (21).

11. Transmission à dérivation de puissance selon l'une quelconque des revendications 6 à 9 caractérisée par le fait que les deux unités hydrostatiques sont disposées axialement d'un côté ou de l'autre du train d'engrenage épicycloidal.

12. Transmission à dérivation de puissance selon l'une quelconque des revendications 6 à 11 caractérisée par le fait qu'elle comprend un train d'engrenage épicycloidal composé (21) à deux entrées et deux sorties permutables à l'aide d'un dispositif de commutation (28).

13. Transmission à dérivation de puissance selon la revendication 12 caractérisée par le fait que l'arbre d'entrée (24) est relié d'une part au variateur hydrostatique (22) et d'autre part au train d'engrenage épicycloidal composé (21), tandis que l'arbre de sortie (217) est relié au train d'engrenage épicycloidal composé (21).

14. Transmission à dérivation de puissance selon l'une des revendications 12 ou 13 caractérisée par le fait que le dispositif de commutation comprend deux embrayages à friction multidisques (214, 215) et un organe de pilotage des dits embrayages.

15. Transmission à dérivation de puissance selon la revendication 14 caractérisée par le fait que le dispositif de commutation est disposé en bout de la transmission, du côté opposé à l'arbre d'entrée (24).

16. Unité hydrostatique à cylindrée variable, du type à pistons axiaux et plateau inclinable, utilisable en particulier comme pompe ou comme moteur dans un variateur hydrostatique d'une transmission à dérivation de puissance pour véhicule automobile, comportant un dispositif de commande de cylindrée actionné par une pression de pilotage, caractérisée par le fait que le dispositif de commande de cylindrée comprend deux vérins hydrauliques (314, 315) de positionnement et de compensation à simple effet, disposés de façon à agir sur le plateau inclinable (33) en des zones sensiblement diamétralement opposées, et un circuit hydraulique (326) d'alimentation des deux vérins de positionnement et de compensation, capable d'alimenter l'un des deux vérins à la pression de refoulement de l'unité hydrostatique et l'autre vérin à une pression de commande modulée pour commander l'inclinaison du plateau.

17. Unité hydrostatique à cylindrée variable selon la revendication 16, caractérisée par le fait que le circuit hydraulique d'alimentation des deux vérins de positionnement et de compensation comprend un distributeur inverseur (327) capable d'inverser l'alimentation des deux vérins à la pression de commande modulée, selon le sens de l'inclinaison du plateau.

18. Unité hydrostatique à cylindrée variable selon la revendication 17, caractérisée par le fait que le circuit hydraulique d'alimentation des deux vérins de positionnement et de compensation comprend, pour chaque vérin, un distributeur sélecteur (328, 329) capable d'alimenter sélectivement chacun des deux vérins, à la pression de refoulement de l'unité hydrostatique ou à la pression de commande modulée.

19. Unité hydrostatique à cylindrée variable selon la revendication 16, 17 ou 18, caractérisée par le fait que le plateau inclinable (33) comporte deux excroissances latérales (314a, 315a) diamétralement opposées sur lesquelles viennent s'appuyer respectivement les tiges des deux vérins hydrauliques (314, 315) de positionnement et de compensation, par l'intermédiaire de patins de friction.

20. Transmission à dérivation de puissance pour véhicule automobile du type comprenant un variateur hydrostatique, caractérisée par le fait que le variateur hydrostatique comporte deux unités hydrostatique à cylindrée variable selon l'une quelconque des revendications 16 à 19.
